(19) Europäisches Patentamt
European Patent Office
Office européen des brevets

(11) **EP 4 660 614 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
*G01N 21/71* (2006.01)

(21) Application number: 24778627.0

(52) Cooperative Patent Classification (CPC):
**G01N 21/718; C04B 18/142; G01J 3/443;**
C04B 2111/0075; G01N 2201/1296

(22) Date of filing: 26.01.2024

(86) International application number:
**PCT/JP2024/002416**

(87) International publication number:
**WO 2024/202481 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 29.03.2023 JP 2023053404

(71) Applicant: **JFE Steel Corporation**
**Tokyo 100-0011 (JP)**

(72) Inventors:
• **INOSE Masao**
**Tokyo 100-0011 (JP)**
• **KATO Yusuke**
**Tokyo 100-0011 (JP)**

(74) Representative: **Haseltine Lake Kempner LLP**
**Bürkleinstrasse 10**
**80538 München (DE)**

(54) **METHOD FOR GENERATING STEELMAKING SLAG FREE LIME CONTENT ESTIMATION MODEL, METHOD FOR ESTIMATING FREE LIME CONTENT OF STEELMAKING SLAG, STEELMAKING SLAG SHIPMENT MANAGEMENT METHOD, AND METHOD FOR MANUFACTURING STEELMAKING SLAG FOR ROADS**

(57) Provided are a method for generating a free lime content estimation model for steelmaking slag, by which the free lime content of steelmaking slag can be estimated in a simple, rapid, and highly accurate manner, a method for estimating the free lime content of steelmaking slag, a method for managing shipment of steelmaking slag, and a method for manufacturing iron and steel slag for road construction.

The method for estimating the free lime content of steelmaking slag includes: a step of acquiring an emission spectrum by irradiating steelmaking slag with a laser to convert a portion of a surface of the steelmaking slag into plasma and acquiring an emission spectrum from the plasma; and a step of estimating a free lime content by inputting intensities of an emission spectrum including peaks caused by emission lines of Ca, Fe, and Si, within the emission spectrum acquired in the step of acquiring the emission spectrum, into a free lime content estimation model, to output the free lime content of a steelmaking slag irradiated with the laser.

FIG. 2

EP 4 660 614 A1

## Description

Technical Field

The present invention relates to a method for generating a free lime content estimation model for steelmaking slag, a method for estimating the free lime content of steelmaking slag, a method for managing shipment of steelmaking slag, and a method for manufacturing iron and steel slag for road construction.

Background Art

Among iron and steel slags produced during the steel manufacturing process, steelmaking slags generated in the refining stage, specifically converter slag and electric arc furnace slag, are crystalline and harder than other types of slags. Steelmaking slags can be suitably used as base course materials for roads when cooled and then crushed into a predetermined particle size. However, a portion of quicklime used during the refining process may remain in steelmaking slags. The quicklime that remains in the steelmaking slags is referred to as free lime. Alternatively, the quicklime that remains in the steelmaking slags may be referred to as free calcium oxide, uncombined lime, or f-CaO, or other terms. This free lime undergoes a hydration reaction when exposed to water, such as rainwater or seawater, resulting in volume expansion. Therefore, when steelmaking slag containing free lime is used as a base course material, the volume expansion caused by the hydration reaction of the free lime in the steelmaking slag may result in the formation of ridge-like irregularities in the base course. There is also a possibility of occurrence of pop-outs, in which the base course swells locally into a mound and breaks through the asphalt. The occurrence of such a condition may hinder the movement of vehicles and pedestrians.

JIS A 5015:2018 "Iron and steel slag for road construction" specifies iron and steel slag (hereinafter referred to as "iron and steel slag for road construction") used in road base courses and hot mix asphalt. Specifically, JIS A 5015:2018 specifies the physical and chemical properties, as well as the particle size, of iron and steel slag for road construction according to the intended application of iron and steel slag for road construction. For example, when steelmaking slag is used as iron and steel slag for road construction, the expansibility of steelmaking slag is required to be 1.0% or less in terms of water immersion expansion rate.

To satisfy this requirement, steelmaking slag after crushing is subjected to aging treatment in which the steelmaking slag reacts with air and water to stabilize the expansion stability of the steelmaking slag.

The steelmaking slag produced in a converter and the aging treatment will be described. In a converter, blowing is performed in a batch process for each charge. The operation of the converter under almost the same conditions still easily generates variations in properties, such as basicity, viscosity, and chemical composition, which are indicative of the reactivity of steelmaking slag. Equipment-related errors may also occur. As a result, the free lime content of the steelmaking slag produced per charge varies inevitably.

Currently, a mixture of steelmaking slag accumulated from multiple charges is stored in a slag yard for aging treatment. Aging treatment can be generally classified into atmospheric aging and steam aging. In atmospheric aging treatment, steelmaking slag is stored in a slag yard for a predetermined period, allowing water in the air to react with free lime. In steam aging, steam is supplied to steelmaking slag stored in a slag yard for a predetermined period, allowing steam (water) to react with free lime. The expansion of steelmaking slag is correlated with the free lime content. Regardless of which aging treatment is performed, it is thus appropriate to quantify the free lime content of steelmaking slag and perform aging treatment for a time according to the free lime content. Specifically, the storage period in the slag yard, that is, the aging treatment time, is determined by sampling a portion of the steelmaking slag stored in the slag yard to evaluate its expansibility and free lime content and determining the aging treatment time on the basis of these results. However, the steelmaking slag stored in the slag yard is a mixture of steelmaking slag from multiple charges, as described above. Therefore, the evaluation of expansibility and free lime content described above assesses only the expansibility and free lime content of the steelmaking slag from one of multiple charges.

Considering the safety of using steelmaking slag as a base course material for roads, the aging treatment is preferably performed for a longer time than the aging treatment time determined based on the expansibility and free lime content of the steelmaking slag obtained as described above. However, even if the aging treatment is performed for a long time set as described above, there is a possibility that the expansibility of the steelmaking slag after the aging treatment may not satisfy the requirements specified in JIS A 5015:2018. If the requirements are not satisfied, the aging treatment is performed once again.

The simple and quick evaluation of the free lime content of steelmaking slag enables prediction of the expansibility of steelmaking slag produced for each charge. In addition, steelmaking slag for each charge can be subjected to aging treatment for an appropriate time. Even for a mixture of steelmaking slag from multiple charges, the total amount, average value, and maximum value of free lime content in the mixture are determined by using the free lime content for each charge. Therefore, steelmaking slag can also be subjected to aging treatment for an appropriate time according to the total amount, average value, and maximum value described above.

Some methods for quantifying the free lime content of steelmaking slag have been disclosed. Non Patent Literature 1 discloses an ethylene glycol extraction method. In the ethylene glycol extraction method, steelmaking slag ground to 0.074 mm or less is stirred for one hour in ethylene glycol heated to 80°C to dissolve calcium oxide (CaO) contained in the steelmaking slag. Subsequently, calcium (Ca) in ethylene glycol is quantified to determine the free lime content of the steelmaking slag. The ethylene glycol extraction method is a practical standard method used in the iron and steel industry.

Patent Literature 1 discloses a method for quantifying the free lime content of steelmaking slag from the ratio of the integrated intensity of the nuclear magnetic resonance spectrum obtained from a mixture of steelmaking slag and a reagent using solid-state NMR.

Patent Literature 2 discloses a method for reducing the hydration expansion of steelmaking slag by estimating the free lime content of the steelmaking slag from a $CaO$-$SiO_2$-$MgO$-$Al_2O_3$ four-component phase diagram and controlling the composition of the steelmaking slag.

Patent Literature 3 discloses a slag composition analysis method by calculating the amount of Ca contained in slag in terms of CaO, assuming that all Ca contained in the slag exists as CaO.

Non Patent Literature 2 discloses, as a related art, a method for estimating an alternative indicator (L value) correlated with the free lime content using an estimation formula based on the composition and stoichiometry of a Ca-containing specific mineral phase of slag.

Citation List

Patent Literature

PTL 1: Japanese Unexamined Patent Application Publication No. 2012-42464
PTL 2: Japanese Unexamined Patent Application Publication No. 2001-64714
PTL 3: Japanese Unexamined Patent Application Publication No. 2016-48235

Non Patent Literature

NPL 1: "Standardization of Techniques for Characterization of Free CaO in Iron and Steel Slag, Final Report of the Study Group on Standardization of Techniques for Characterization of Free CaO in Iron and Steel Slag", pp. 88-95, March 28, 2013, edited by Committee for Standardization of Techniques for Characterization of Free CaO in Iron and Steel Slag, Analytical Technology Committee, Division of Process Technology, The Iron and Steel Institute of Japan
NPL 2: Wada, Kaname, et al., "Hardness Stabilization Treatment for Molten Converter Slag," Seitetsu Kenkyu (Iron and Steel Research in Japanese), No. 3011, 1980, pp. 59-70
NPL 3: Okazaki, Kodai, et al., "Examination of Measurement Method of the Hardness by Laser Induced Breakdown Spectroscopy (LIBS)," The Atomic Energy Society of Japan, 2019 Spring Annual Meeting, March 2019
NPL 4: Murayama, Seiji, et al., "Plasma Emission Spectroscopy for Solid Sample Analysis: Measurement Methods Series 2, The Spectroscopical Society of Japan, Center for Academic Publications Japan, October 1982

Summary of Invention

Technical Problem

The ethylene glycol extraction method described in Non Patent Literature 1 involves the complexity characteristic of wet analysis and lacks speed. This method also requires operator's proficiency to obtain highly accurate quantitative results. Since free lime (f-CaO) and calcium hydroxide ($Ca(OH)_2$) contained in steelmaking slag are extracted simultaneously, this method requires quantifying the amount of $Ca(OH)_2$ by thermogravimetric analysis and calculating the free lime content, resulting in a high workload.

The method disclosed in Patent Literature 1 involves complicated sample preparation, requires specialized analytical equipment, and takes several days to complete measurements, resulting in slow performance.

The method disclosed in Patent Literature 2 estimates the free lime content by assuming a thermodynamically ideal equilibrium state and lacks accuracy when applied to complex multi-component systems, such as steelmaking slag.

The slag composition analysis method described in Patent Literature 3 estimates the free lime content by assuming that all Ca contained in slag exists as CaO, as described above. Therefore, the slag composition analysis method described in Patent Literature 3 may not be able to determine the free lime content with high accuracy.

The present invention has been made to solve the above problems and provides a method for generating a free lime content estimation model for steelmaking slag, by which the free lime content of steelmaking slag can be estimated in a simple, rapid, and highly accurate manner, a method for estimating the free lime content of steelmaking slag, a method for managing shipment of steelmaking slag, and a method for manufacturing iron and steel slag for road construction.

Solution to Problem

The inventors of the present invention have focused on the emission spectrum obtained by subjecting steelmaking slag to laser-induced breakdown spectroscopy, completing the present invention. The present invention has been made to achieve the above object.

[1] A method for estimating a free lime content of steelmaking slag, the method comprising: a step of acquiring an emission spectrum by irradiating steelmaking slag with a laser to convert a portion of a surface of the steelmaking slag into plasma and acquiring an emission spectrum from the plasma; and a step of estimating a free lime content by inputting intensities of an emission spectrum including peaks caused by emission lines of Ca, Fe, and Si, within the emission spectrum acquired in the step of acquiring the emission spectrum, into a free lime content estimation model, to output a free lime content of the steelmaking slag irradiated with the laser.

[2] The method for estimating a free lime content of steelmaking slag according to [1], wherein the estimation step includes inputting intensities of an emission spectrum further including peaks caused by emission lines of Al and P, into the free lime content estimation model.

[3] The method for estimating a free lime content of steelmaking slag according to [1], wherein the free lime content estimation model is constructed using the partial least squares regression using the intensities of the emission spectrum including peaks caused by the emission lines of Ca, Fe, and Si, within the emission spectrum acquired in the step of acquiring the emission spectrum, as explanatory variables, and using the free lime content as a response variable.

[4] The method for estimating a free lime content of steelmaking slag according to [3], wherein the free lime content estimation model uses intensities of an emission spectrum further including peaks caused by emission lines of Al and P, as explanatory variables.

[5] The method for estimating a free lime content of steelmaking slag according to [1], wherein the free lime content estimation model is a trained machine learning model using the intensities of the emission spectrum including peaks caused by the emission lines of Ca, Fe, and Si, within the emission spectrum acquired in the step of acquiring the emission spectrum, as input data, and using the free lime content as output data.

[6] The method for estimating a free lime content of steelmaking slag according to [5], wherein the free lime content estimation model uses intensities of an emission spectrum further including peaks caused by emission lines of Al and P, as input data.

[7] The method for estimating a free lime content of steelmaking slag according to [1], wherein the emission spectrum acquired in the step of acquiring the emission spectrum has wavelengths of 270 nm or more and 410 nm or less.

[8] A method for manufacturing iron and steel slag for road construction, the method comprising: estimating a free lime content of steelmaking slag using the method for estimating a free lime content of steelmaking slag according to [1]; and setting aging treatment conditions for the steelmaking slag based on the estimated free lime content of the steelmaking slag.

[9] A method for managing shipment of steelmaking slag, the method comprising: estimating a free lime content of steelmaking slag using the method for estimating a free lime content of steelmaking slag according to [1]; and selecting a shipping destination for the steelmaking slag based on the estimated free lime content of the steelmaking slag.

[10] A method for generating a free lime content estimation model for steelmaking slag for use in estimating a free lime content in steelmaking slag, the method comprising: a first acquisition step of irradiating the steelmaking slag with a laser to convert a portion of a surface of the steelmaking slag into plasma and acquiring an emission spectrum from the plasma; a second acquisition step of acquiring an actual free lime content of the steelmaking slag whose emission spectrum has been acquired in the first acquisition step; and a model generation step of acquiring multiple datasets each consisting of pairs of the emission spectrum acquired in the first acquisition step and the actual free lime content acquired in the second acquisition step, and, based on these datasets, generating a free lime content estimation model using intensities of an emission spectrum including peaks caused by emission lines in Ca, Fe, and Si, within the emission spectrum acquired in the first acquisition step, as input, and using the actual free lime content acquired in the second acquisition step as output.

[11] The method for generating a free lime content estimation model for steelmaking slag according to [10], wherein the model generation step uses intensities of an emission spectrum further including peaks caused by emission lines of Al and P, as input.

Advantageous Effects of Invention

The present invention can provide a method for generating a free lime content estimation model for steelmaking slag, by which the free lime content of steelmaking slag can be estimated in a simple, rapid, and highly accurate manner. According to the present invention, the use of the free lime content estimation model enables estimation of the free lime content of steelmaking slag in a simple, rapid, and highly accurate manner. As a result, the free lime content of steelmaking slag for each charge can be estimated in a simple, rapid, and highly accurate manner, and an appropriate aging treatment time can be set on the basis of the free lime content of the steelmaking slag for each charge. Even for a mixture of steelmaking slag from multiple charges, an appropriate aging treatment time can be set on the basis of the maximum free lime content. As a result, it is possible to achieve the expansion stability of iron and steel slag for road construction and perform efficient aging treatment, thereby reducing the manufacturing costs for steelmaking slag used as a base course material. In addition, an appropriate shipping destination for steelmaking slag can be selected on the basis of the estimated free lime content, thereby improving the efficiency of steelmaking slag shipment management in the facility.

Brief Description of Drawings

[Fig. 1] Fig. 1 illustrates example regression coefficients.
[Fig. 2] Fig. 2 illustrates the relationship between the measured free lime content and the free lime content estimated by substituting the emission spectrum of steelmaking slag samples shown in Table 1 into the model equation.
[Fig. 3] Fig. 3 illustrates an emission spectrum attributed to Ca, Fe, Si, Al, and P in the wavelength range of 270 to 410 nm, which is used as explanatory variables for generating the model equation, and the intensity of the emission spectrum in Inventive Example 4.

Description of Embodiments

The inventors of the present invention have investigated a method for estimating the free lime content of steelmaking slag in a simple, rapid, and highly accurate manner. In this investigation, the inventors of the present invention have focused on laser-induced breakdown spectroscopy (hereinafter referred to as LIBS), which is an elemental analysis method that allows direct analysis of samples in air without pretreatment and enables simultaneous rapid multi-element analysis through simple operations. In LIBS, the steelmaking slag to be analyzed is irradiated with a high-energy pulsed laser to convert a portion of the steelmaking slag into plasma. In LIBS, the excited light, i.e., plasma emission, obtained from the plasma of steelmaking slag is collected and spectrally dispersed to perform quantitative analysis from the wavelengths and intensities of the emission lines corresponding to the elements.
The elements that constitute steelmaking slag exist mainly in the form of oxides. However, the elements constituting steelmaking slag exist not only as oxides of individual elements but also as composite oxides containing multiple elements. For example, calcium (Ca) exists as calcium silicates (e.g., $CaSiO_3$), calcium aluminates (e.g., $CaAl_2O_4$), calcium ferrites (e.g., $CaFeO_2$), and other forms. It is thus difficult to calculate the amounts of oxides of individual elements and composite oxides from the amount of each element contained in steelmaking slag obtained by LIBS.
Non Patent Literature 3 suggests that the emission spectrum obtained by LIBS may vary depending on the bonding state of the compounds. The inventors of the present invention have focused on the emission spectrum obtained by LIBS and have studied the estimation of the free lime content based on the relationship between the emission spectrum obtained by LIBS and the free lime content.
The Ca-based compounds contained in steelmaking slag include calcium silicates (e.g., $CaSiO_3$), calcium aluminates (e.g., $CaAl_2O_4$), calcium ferrites (e.g., $CaFeO_2$), and tricalcium phosphates (e.g., $Ca_3(PO_4)_2$), as described above. The inventors of the present invention have focused on the emission spectrum of the Ca-based compounds obtained using LIBS. Specifically, a free lime content estimation model is generated by using the emission spectrum of the Ca-based compounds as explanatory variables and the actual free lime content as a response variable. The emission spectrum used as explanatory variables is an emission spectrum including at least one peak caused by the emission line of Ca, at least one peak caused by the emission line of Fe, and at least one peak caused by the emission line of Si among the peaks caused by the emission lines of Ca, Fe, Si, Al, and P, which are elements that constitute the Ca-based compounds. The inventors of the present invention have found that the free lime content can be estimated accordingly.
The present invention has been accomplished on the basis of the above finding. A preferred embodiment of the present invention will be described in detail below.

(Steelmaking Slag)

The steelmaking slag used in this embodiment may be either converter slag or electric arc furnace slag. The steelmaking slag may be in a molten state or a solid state.

(First Acquisition Step)

Using a conventionally known laser-induced breakdown spectrometer, the surface of steelmaking slag is irradiated with a pulsed laser to convert a portion of the surface of the steelmaking slag into plasma, and the emission spectrum is acquired from the plasma. The surface of the steelmaking slag may be irradiated with a pulsed laser once or multiple times. The emission spectrum obtained by irradiating the surface of the steelmaking slag with a pulsed laser may be an emission spectrum obtained from a single laser irradiation, or an emission spectrum obtained by accumulating multiple emission spectra obtained from multiple laser irradiations. To improve reliability, multiple emission spectra each obtained from a single laser irradiation or multiple emission spectra each obtained by accumulating multiple emission spectra may be used. The reliability of the emission spectrum is preferably ensured by using multiple emission spectra each acquired by accumulating multiple emission spectra from multiple laser irradiations. The term "a single irradiation of a pulsed laser" as described above refers to emitting a pulsed laser to steelmaking slag once. In the case of a double-pulsed laser, where a pulsed laser is emitted twice in rapid succession, that is, within a short time, the term "a single irradiation of a pulsed laser" refers to emitting a pulsed laser to steelmaking slag twice within a short time.
The interval between pluses of a pulsed laser for a double pulsed laser, when used for LIBS, is preferably several microseconds to tens of microseconds, more preferably, for example, 2 microseconds.
LIBS can be used for steelmaking slag in either a molten state or a solid state. For molten steelmaking slag, the emission spectrum is acquired by, for example, directly irradiating, with a pulsed laser, molten steelmaking slag received in a slag pot after converter blowing. For solid steelmaking slag, steelmaking slag is sampled from the slag pot described above and cooled. A small piece of steelmaking slag thus obtained is irradiated with a pulsed laser to acquire an emission spectrum. Solid steelmaking slag tends to exhibit greater variations (differences) in its emission spectrum between samples of steelmaking slag than molten steelmaking slag due to compositional variations. It is thus preferable to perform multi-point analysis to reduce variations in emission spectrum. Multi-point analysis refers to sampling from multiple different locations in steelmaking slag from a predetermined charge, that is, in one steelmaking slag, acquiring the emission spectrum from one location for each sample of steelmaking slag, and calculating their average value. Alternatively, multi-point analysis refers to sampling from one location in steelmaking slag from a predetermined charge, that is, in one steelmaking slag, acquiring the emission spectra from multiple locations in the sampled steelmaking slag, and calculating their average value. Alternatively, multi-point analysis refers to combining these two multi-point analyses to acquire multiple emission spectra and calculating their average value.

(Second Acquisition Step)

In this embodiment, the free lime content of steelmaking slag whose emission spectrum has been acquired in the first acquisition step is measured. The free lime content may be measured using steelmaking slag from the same lot as the steelmaking slag whose emission spectrum has been acquired in the first acquisition step.
Specifically, the free lime content of steelmaking slag is measured by a conventionally known ethylene glycol extraction method. In this embodiment, the ethylene glycol extraction method is used as an example of a method for measuring the free lime content of steelmaking slag, but the present invention is not limited to this method. The second acquisition step and the first acquisition step may be performed such that one of the two acquisition steps is performed before the other acquisition step or the two acquisition steps are performed nearly simultaneously, that is, in parallel.

(Model Generation Step)

A free lime content estimation model for steelmaking slag is generated by using the emission spectrum acquired in the first acquisition step as explanatory variables and the measured free lime content acquired in the second acquisition step as a response variable.
The explanatory variables may include variables that have a certain degree of mutual correlation, and the collinearity based on such correlation may impair the estimation accuracy in simple multiple regression analysis. Since the constituent elements in steelmaking slag may include elements that have a certain degree of mutual correlation, explanatory variables may also exhibit mutual correlation even in the analysis of steelmaking slag. It is thus preferable to select an analytical method that is, in principle, free from collinearity issues. Examples of such a method include partial least squares regression (PLS).

Partial least squares regression involves transforming explanatory variables into mutually uncorrelated principal component axes and then performing regression analysis between a small number of principal components and a response variable. Therefore, partial least squares regression is suitable for estimating a response variable from multiple analysis values whose explanatory variables exhibit correlation with each other, and may achieve high estimation accuracy. In this embodiment, the free lime content of steelmaking slag is estimated by using a model (partial least squares regression model) constructed by partial least squares regression as a free lime content estimation model.

The emission spectrum to be input as explanatory variables into the free lime content estimation model will be specifically described as the data for generating the partial least squares regression model. The emission spectrum is an emission spectrum including at least one peak caused by the emission line of Ca, at least one peak caused by the emission line of Fe, and at least one peak of the emission line of Si, within the emission spectrum of steelmaking slag acquired in the first acquisition step. This is because that the peak caused by the emission line of Ca, the peak caused by the emission line of Fe, and the peak caused by the emission line of Si may reflect information corresponding to the amount of Ca-based compounds. Preferably, the emission spectrum further including at least one peak caused by the emission line of Al and at least one peak caused by the emission line of P is used as explanatory variables. For example, the emission spectrum described above may be the emission spectrum over the entire wavelength range measured in the first acquisition step. Alternatively, the emission spectrum may be an emission spectrum in the wavelength range of 400 to 540 nm, which is a partially continuous wavelength range, within the entire wavelength range measured in the first acquisition step. Alternatively, the emission spectrum may be an emission spectrum in the wavelength range of 270 to 410 nm, which is a partially continuous wavelength range, within the entire wavelength range measured in the first acquisition step.

The emission spectrum includes various emission lines resulting from complex transitions between excitation levels, induced by a laser as an energy source. In other words, the emission spectrum is the data indicating the intensity of plasma emission at a plasma emission wavelength specific to each element. When multiple elements are present in steelmaking slag, the emission spectrum includes multiple emission lines specific to the respective excited elements. Each element has a representative or characteristic wavelength (hereinafter referred to as "central wavelength"), which differs from those of other elements. In the emission spectrum, the data indicating the emission lines of the elements appear as waveforms (referred to as peaks) centered at the central wavelengths of the respective elements. The central wavelengths for the elements Ca, Fe, Si, Al, and P described above may be, for example, the wavelengths described in Non Patent Literature 4.

In this embodiment, it is preferable to acquire, as explanatory variables, the intensity data at least three points: one at the peak top, which corresponds to the central wavelength of each element in the emission spectrum, and at least one very near point on the peak waveform both below and above the central wavelength. Alternatively, it is more preferable to acquire, as explanatory variables, the intensity data at five or more points in total: one at the peak top of each element and at least two very near points on the peak waveform both below and above the central wavelength. The very near points can be experimentally set in advance. Examples of the very near points include two points on the peak waveform below and above the center wavelength at half the height of the peak top. Examples of the very near points also include the intersection points between the baseline and the peak waveform, or the valley points between adjacent peaks.

A partial least squares regression model corresponding to the free lime content estimation model of this embodiment, which defines the relationship between the explanatory variables and the response variable, is generated.

As an embodiment of the present invention, a method for generating a free lime content estimation model when using ten steelmaking slag samples will be described.

In this embodiment, the free lime content (hereinafter referred to as the measured f-CaO value) for ten steelmaking slag samples was measured by using the conventionally known ethylene glycol extraction method. The measured f-CaO values (mass%, hereinafter referred to simply as %) are summarized in Table 1. The LIBS emission spectrum for ten steelmaking slag samples was acquired as described above. The model equation (free lime content estimation model) represented by Equation (1) below where the emission spectrum was used as explanatory variables and the measured f-CaO value (%) of each steelmaking slag sample shown in Table 1 was used as a response variable was generated. The wavelength range of the emission spectrum of each steelmaking slag sample used as explanatory variables was 270 to 410 nm, and the intensity data of the emission spectrum were acquired at 464 points (n = 464) within this wavelength range.

[Table 1]

| Steelmaking Slag Sample | Measured f-CaO Value (mass%) |
|---|---|
| A | 2.53 |
| B | 1.81 |
| C | 1.46 |

(continued)

| Steelmaking Slag Sample | Measured f-CaO Value (mass%) |
|---|---|
| D | 7.64 |
| E | 0.94 |
| F | 6.49 |
| G | 4.60 |
| H | 6.13 |
| I | 3.51 |
| J | 1.85 |

$$Y = k_0 + k_1 \times X_1 + k_2 \times X_2 + k_3 \times X_3 + \cdots k_n \times X_n \cdots \quad (1)$$

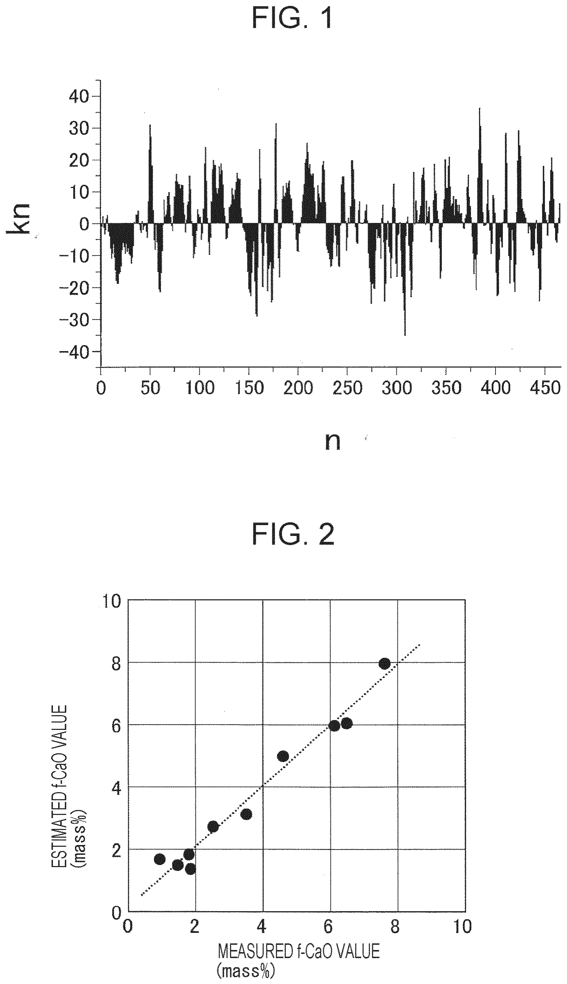

In Equation (1), Y represents the free lime content (f-CaO), and $X_1$ to $X_n$ represent the intensity data of the emission spectrum corresponding to explanatory variables. $k_0$ to $k_n$ represent the regression coefficients obtained by expanding the latent variables, and Fig. 1 illustrates example regression coefficients. The regression coefficients $k_0$ to $k_n$ may be associated with latent variables and may incorporate their weights. The relationship between the latent variables and the regression equation is as described below.

$$Y = b_0 + b_1 \times T_1 + b_2 \times T_2 + \cdots + b_r \times T_r \cdots \quad (2)$$

In Equation (2), $T_1$ to $T_r$ represent latent variables, and $b_0$ to $b_r$ represent regression coefficients for the latent variables. Specifically, $T_1$ represents a first latent variable, $T_2$ represents a second latent variable, and $T_r$ represents the rth latent variable. The latent variables can be represented by the following equations.

$$T_1 = w_{11} \times X_1 + w_{12} \times X_2 + \cdots + w_{1n} \times X_n$$

$$T_2 = w_{21} \times X_1 + w_{22} \times X_2 + \cdots + w_{2n} \times X_n$$

$$T_r = w_{r1} \times X_1 + w_{r2} \times X_2 + \cdots + w_{rn} \times X_n$$

$w_{11}$ to $w_{rn}$ are weights for input variables for the latent variables.

Separate from to the ten steelmaking slag samples described above, a steelmaking slag with an unknown free lime content (referred to as steelmaking slag of interest) was used to acquire the LIBS emission spectrum in the same manner as described above. The steelmaking slag of interest is steelmaking slag to be subjected to aging treatment, and may be, for example, either converter slag or electric arc furnace slag. The steelmaking slag of interest may be in either a molten state or a solid state. The step of acquiring the LIBS emission spectrum of the steelmaking slag of interest corresponds to the emission spectrum acquisition step in this embodiment.

(Estimation Step)

The free lime content (mass%, hereinafter referred to simply as "%") of the steelmaking slag of interest is calculated by using the free lime content estimation model represented by Equation (1). Specifically, the LIBS emission spectrum of the steelmaking slag of interest is substituted as explanatory variables into the free lime content estimation model represented by Equation (1). The free lime content (%) of the steelmaking slag of interest is calculated as a response variable.

Fig. 2 illustrates the relationship between the measured free lime content (hereinafter referred to as "measured f-CaO value") (%) of steelmaking slag samples shown in Table 1 and the estimated free lime content (hereinafter referred to as "estimated f-CaO value") (%) obtained by substituting the emission spectrum of steelmaking slag of interest into the above model equation. The steelmaking slag samples shown in Table 1 are assumed to be steelmaking slags of interest with unknown free lime contents. The horizontal axis of Fig. 2 represents the measured f-CaO value (mass%, hereinafter simply referred to as %), and the vertical axis represents the estimated f-CaO value (mass%, hereinafter simply referred to as %). The coefficient of determination ($R^2$) is 0.9718, indicating a very high correlation between the measured f-CaO value (%) and the estimated f-CaO value (%). According to this embodiment, the free lime content can thus be predicted with high accuracy.

In this embodiment, the free lime content of steelmaking slag is estimated for each charge, for example, in a converter or electric arc furnace by using the free lime content estimation model described above. Subsequently, the aging treatment time suitable for steelmaking slag for each charge is set on the basis of the estimated f-CaO value (%) to perform aging treatment. For a mixture of steelmaking slag from multiple charges, the aging treatment time is set on the basis of the maximum value or average value of the estimated f-CaO value (%) for each charge, or the total amount of f-CaO to perform aging treatment.

Alternatively, the storage location of steelmaking slag is selected for each charge on the basis of the estimated f-CaO value (%). Specifically, steelmaking slags with similar estimated f-CaO values (%) are stored in the same location. This enables efficient aging treatment. The aging treatment time set on the basis of the estimated f-CaO value (%) and the storage location for steelmaking slag selected on the basis of the estimated f-CaO value (%) correspond to the aging treatment conditions for steelmaking slag in the method for manufacturing iron and steel slag for road construction according to this embodiment.

According to this embodiment, the emission spectrum of each steelmaking slag can thus be readily acquired using LIBS. The free lime content (%) can be estimated in a simple, rapid, and highly accurate manner on the basis of the emission spectrum and the free lime content estimation model. Even if the free lime content (%) of the steelmaking slag varies from charge to charge, the free lime content (%) of steelmaking slag for each charge can be estimated in a simple, rapid, and highly accurate manner. This enables setting of the optimal aging treatment time for steelmaking slag for each charge. Additionally, it is also possible to perform the operation for optimizing the storage location for steelmaking slag for each charge depending on its free lime content (%). Therefore, even if the free lime content (%) of the steelmaking slag varies from charge to charge, the excess or deficiency of the aging treatment time for steelmaking slag for each charge can be reduced to improve the efficiency of the aging treatment, reducing the costs for the aging treatment of steelmaking slag.

The free lime content in the steelmaking slag can be sufficiently reduced through the above aging treatment. Therefore, the iron and steel slag for road construction composed of the steelmaking slag, that is, steelmaking slag for base course materials, is unlikely to expand even when exposed to water, thereby improving the expansion stability and quality stability of steelmaking slag for base course materials. According to this embodiment, the free lime content (%) can be estimated in a simple, rapid, and highly accurate manner. It is also possible to manage shipment of steelmaking slag appropriately and rapidly on the basis of the estimated free lime content (%) and improve the efficiency of slag shipment management in the facility. For example, even if the estimated free lime content (%) of steelmaking slag deviates from the allowable range, it is possible to quickly select a shipping destination in applications, such as calcia improved materials, where the expansibility of steelmaking slag is not an issue or is less likely to cause problems. The free lime content (%) in steelmaking slag may be estimated after aging treatment, instead of estimating the free lime content (%) in steelmaking slag before aging treatment. This allows for a simple and rapid determination of whether the free lime content in steelmaking slag has been sufficiently reduced through the aging treatment. The allowable range described above refers to the free lime content of steelmaking slag that meets the requirements specified in JIS A 5015:2018 "Iron and steel slag for road construction."

As described above, in this embodiment, the free lime content estimation model using the LIBS emission spectrum of steelmaking slag as explanatory variables, that is, input data, and the free lime content as a response variable, that is, output data, is generated in advance. The LIBS emission spectrum of steelmaking slag whose free lime content (%) is to be estimated is substituted into the free lime content estimation model. This allows the free lime content (%) of the steelmaking slag to be estimated in a simple, rapid, and highly accurate manner. The expansibility of the steelmaking slag can also be estimated on the basis of the estimated free lime content (%). The estimation of the free lime content (%) of steelmaking slag using the free lime content estimation model for steelmaking slag corresponds to the "method for estimating the free lime content of steelmaking slag" in the present invention. Since the free lime content estimation method for steelmaking slag in the present invention is a simple method as described above, the free lime content (%) can be estimated within approximately 40 minutes. Therefore, the free lime content (%) of steelmaking slag for each charge can be rapidly estimated.

In this embodiment, a partial least squares regression model is used as the free lime content estimation model, but a trained machine learning model may be used instead. In other words, multiple datasets each composed of the explanatory variables and the response variable are acquired, and machine learning is performed using these datasets as training data to generate a trained machine learning model as a free lime content estimation model. The LIBS emission spectrum of steelmaking slag with unknown free lime content (%) may be then input into the trained machine learning model to output the estimated free lime content.

In this embodiment, the wavelength range of the emission spectrum of each steelmaking slag sample was 270 to 410 nm, and the intensity data of the emission spectrum at 464 points (n = 464) within this wavelength range were used as explanatory variables. However, instead of this emission spectrum, any emission spectrum including a peak caused by the emission line of Ca, a peak caused by the emission line of Fe, and a peak caused by the emission line of Si may be used as the emission spectrum for the explanatory variables. In this embodiment, ten steelmaking slag samples were used to generate the model equation. However, 10 or more steelmaking slag samples may be used, or 20 or more steelmaking slag samples are more preferably used.

EXAMPLES

Examples in which the free lime content (%) of steelmaking slag is estimated by using the free lime content estimation model for steelmaking slag according to this embodiment will be described below. The present invention is not limited to Examples below.

The emission spectrum obtained by irradiating each of the steelmaking slag samples shown in Table 1 with a pulsed laser (100 mJ, 15 Hz) for one second and the accumulated emission spectra was used as explanatory variables. The measured f-CaO value (%) of each steelmaking slag sample shown in Table 1 was used as a response variable. A model equation (free lime content estimation model) was generated on the basis of the explanatory variables, the response variable, and Equation (1). The intensity data of the emission spectrum corresponding to the wavelengths selected in each of Inventive Examples 1 to 3 were used as those of the emission spectrum used as explanatory variables for generating the model equation. "OriginPro2017" (registered trademark) was used to perform partial least squares regression analysis for generating the model equation.

Three types of steelmaking slag (X, Y, and Z) were prepared as samples of steelmaking slag for estimating the free lime content (%). Each type of steelmaking slag (X, Y, and Z) was an approximately 3 cm steelmaking slag lump collected from steelmaking slag discharged after decarburization blowing. The surface of each type of steelmaking slag (X, Y, Z) was irradiated with a pulsed laser (100 mJ, 15 Hz) for one second, as in the generation of the model equation. The emission spectra acquired over one second were accumulated, and the resulting emission spectrum was used as explanatory variables for each type of steelmaking slag.

Next, the emission spectrum obtained from each type of steelmaking slag (X, Y, Z) was substituted as explanatory variables into the free lime content estimation model to estimate the free lime content (%) of each type of steelmaking slag (X, Y, Z). However, the intensity data of the emission spectrum corresponding to the same wavelengths as the explanatory variables used for generating the model equation were used as explanatory variables. For comparison, the free lime content (%) of each type of steelmaking slag (X, Y, Z) was measured using the ethylene glycol extraction method. The estimated f-CaO values (%) are compared with the measured f-CaO values (%).

In Inventive Example 1, the emission spectrum of each type of steelmaking slag (X, Y, Z) used as explanatory variables was an emission spectrum in the wavelength range of 270 to 410 nm, which is a wavelength range including all the emission lines of Ca, Fe, Si, Al, and P. Specifically, the intensity data at 464 points on the emission spectrum in the wavelength range of 270 to 410 nm were used as explanatory variables. The free lime content estimation model was generated from the emission spectrum of the slag described above in Table 1, and the free lime content (%) was estimated from the emission spectrum of each type of steelmaking slag (X, Y, Z) on the basis of the model equation.

In Inventive Example 2, the emission spectrum of each type of steelmaking slag (X, Y, Z) used as explanatory variables was an emission spectrum in the wavelength range of 400 to 540 nm, which is a wavelength range including all the emission lines of Ca, Fe, Si, Al, and P. Specifically, the intensity data at 464 points on the emission spectrum in the wavelength range of 400 to 540 nm were used as explanatory variables. In Inventive Example 2, the free lime content (%) was estimated in the same manner as in Inventive Example 1, except for the explanatory variables used for generating the model and estimating the free lime content.

In Inventive Example 3, the emission spectrum of each type of steelmaking slag (X, Y, Z) used as explanatory variables includes the intensity data at the peak tops of the peaks attributed to Ca, Fe, Si, Al, and P in the wavelength range of 270 to 410 nm, and at two points immediately before and after each peak top. Specifically, the intensity data for Ca include the intensities of the emission spectrum at the Ca peak top (393.4 nm) and at the points (393.1 nm, 393.7 nm) before and after the Ca peak top. The intensity data for Fe include the intensities of the emission spectrum at the Fe peak top (374.9 nm) and at the points (374.6 nm, 375.2 nm) before and after the Fe peak top. The intensity data for Si include the intensities of the emission spectrum at the Si peak top (288.1 nm) and at the points (287.8 nm, 288.4 nm) before and after the Si peak top. The intensity data for Al include the intensities of the emission spectrum at the Al peak top (309.2 nm) and at the points (308.9 nm, 309.5 nm) before and after the Al peak top. The intensity data for P include the intensities of the emission spectrum at the P peak top (405.9 nm) and at the points (405.6 nm, 406.2 nm) before and after the P peak top. A total of 15 intensity data points from each emission spectrum described above was used as explanatory variables. In Inventive Example 3, the free lime content (%) was estimated in the same manner as in Inventive Example 1, except for the explanatory variables used for generating the model and estimating the free lime content (%).

In Comparative Example 1, the peak attributed to Ca on the emission spectrum of each type of steelmaking slag (X, Y, Z) was used as explanatory variables. Specifically, 15 intensity data points corresponding to the Ca peak top (393.4 nm) and the Ca peak were used as explanatory variables. In Comparative Example 1, the free lime content (%) was estimated in the same manner as in Inventive Example 1, except for the explanatory variables used for generating the model and estimating the free lime content (%).

In Comparative Example 2, the estimated free lime content (%) for each type of steelmaking slag (X, Y, Z) was calculated using the alternative indicator (L value) described in Non Patent Literature 2. Specifically, the pre-calculated slag component values (wt%) of each type of steelmaking slag (X, Y, Z) were substituted into the equation for calculating "L" described in Non Patent Literature 2 to obtain the L value (≈ estimated free lime content).

The results of Inventive Examples 1 to 3, Comparative Example 1, and Comparative Example 2 are summarized in Table 2. Table 2 suggests that the measured f-CaO values (%) for all types of steelmaking slag (X, Y, Z) generally show better agreement with the estimated f-CaO values (%) in Inventive Examples 1 to 3 than with the estimated f-CaO values (%) in Comparative Example 1 and Comparative Example 2. In other words, the deviation between the measured f-CaO values (%) and the estimated f-CaO values (%) of Inventive Examples 1 to 3 is smaller than the deviation between the measured f-CaO values (%) and the estimated f-CaO values (%) in Comparative Example 1 and Comparative Example 2. With regard to the standard deviation $\sigma d$ of error indicating accuracy, the standard deviations $\sigma d$ of error in Comparative Example 1 and Comparative Example 2 were respectively 0.92 and 0.62 for three types of steelmaking slag (X, Y, Z). The standard deviation $\sigma d$ of error in Inventive Example 1 was 0.38, the standard deviation $\sigma d$ of error in Inventive Example 2 was 0.45, and the standard deviation $\sigma d$ of error in Inventive Example 3 was 0.52. These results indicate that the free lime content (%) can be predicted with high accuracy according to this embodiment.

[Table 2]

| Samples | Measured f-CaO Value (mass%) | Inventive Example 1 | Inventive Example 2 | Inventive Example 3 | Comparative Example 1 | Comparative Example 2 |
|---|---|---|---|---|---|---|
| | | Estimated f-CaO Value (PLS) (mass%) | Estimated f-CaO Value (PLS) (mass%) | Estimated f-CaO Value (PLS) (mass%) | Estimated f-CaO Value (PLS) (mass%) | Estimated f-CaO Value (mass%) |
| | | wavelength range (270 to 410 nm) | wavelength range (400 to 540 nm) | 15 intensity data points, peaks attributed to Si, Al, Ca, Fe, and P | 15 intensity data points, peak attributed to Ca | in accordance with literature |
| X | 6.60 | 5.76 | 5.69 | 6.02 | 5.56 | 4.23 |
| Y | 2.95 | 3.02 | 3.08 | 3.59 | 3.91 | 1.99 |
| Z | 2.50 | 2.28 | 1.79 | 2.81 | 3.34 | 1.35 |

According to this embodiment, by preparing the free lime content estimation model in advance, the free lime content (%) can be easily estimated on the basis of the emission spectrum of steelmaking slag without performing complicated analysis methods, such as the ethylene glycol extraction method. The free lime content (%) can be estimated with high accuracy by using partial least squares regression.

Although the ethylene glycol extraction method takes seven hours to determine the free lime content (%) of steelmaking slag, it takes approximately six minutes to estimate the free lime content (%) of steelmaking slag in this embodiment. Therefore, the method for estimating the free lime content (%) of steelmaking slag according to the present invention significantly contributes to reducing the time required for estimating the free lime content (%). The free lime content (%) can be estimated rapidly.

Example (Inventive Example 4) corresponding to a method for managing shipment of steelmaking slag according to this embodiment will be described below. In Inventive Example 4, the free lime content (%) of steelmaking slag is estimated using the method for estimating the free lime content of steelmaking slag according to this embodiment, and the shipping destination for the steelmaking slag is selected on the basis of the estimated free lime content (%) of the steelmaking slag. The present invention is not limited to Example below.

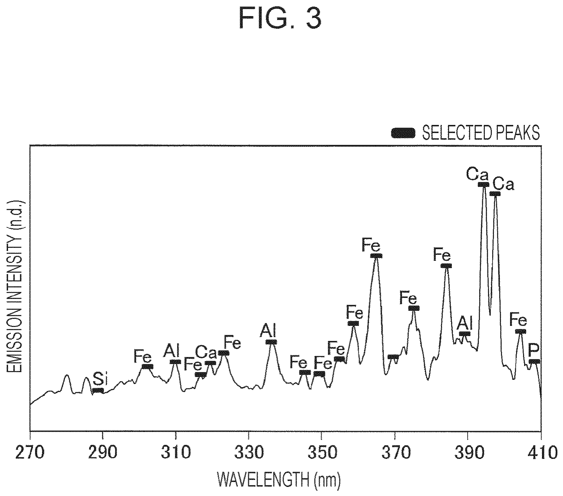

In Inventive Example 4, the emission spectrum obtained by irradiating 20 charges of steelmaking slag in a slag pot with a pulsed laser (100 mJ, 15 Hz) for one second and accumulating the emission spectra was used as explanatory variables. The measured f-CaO value (%) of each steelmaking slag obtained by the ethylene glycol extraction method was used as a response variable. A model equation (free lime content estimation model) was generated on the basis of the explanatory variables, the response variable, and Equation (1). Fig. 3 illustrates an emission spectrum attributed to Ca, Fe, Si, Al, and P in the wavelength range of 270 to 410 nm, which is used as explanatory variables for generating the model equation, and the intensity of the emission spectrum in Inventive Example 4. In Inventive Example 4, a total of 60 intensity data points including the peak top of each peak shown in Fig. 3, and two points immediately before and after each peak top (not shown in Fig. 3) was used as explanatory variables for generating the model equation. Five measurements were performed for each steelmaking slag. "OriginPro2017" (registered trademark) was used to perform partial least squares regression analysis for generating the model equation.

Next, the emission spectrum obtained from the steelmaking slag (Ch. Nos. 1 to 7) subject to the shipment management method, that is, the steelmaking slag whose free lime content (%) was to be estimated, was substituted as explanatory variables into the free lime content estimation model described above. The free lime content (%) of each steelmaking slag (Ch. Nos. 1 to 7) was estimated accordingly (estimated f-CaO value). However, the emission spectrum corresponding to the same wavelengths as the explanatory variables used for generating the model equation was used as explanatory variables. The estimated f-CaO value (%) obtained as described above was compared with the measured free lime content (measured f-CaO value) (%). To measure the free lime content (%), samples for use in measuring the free lime content (%) were first collected from the steelmaking slag (Ch. Nos. 1 to 7) before the steelmaking slag (Ch. Nos. 1 to 7) was spread in a slag yard. The free lime content (%) in each of the samples of the steelmaking slag (Ch. Nos. 1 to 7) was measured using the ethylene glycol extraction method (measured f-CaO value). The estimated f-CaO value (%) was then compared with the measured f-CaO value (%). "OriginPro2017" (registered trademark) was used to perform partial least squares regression analysis.

The steelmaking slag (Ch. Nos. 1 to 7) is steelmaking slag received in a slag pot for transport within the steel plant after decarburization treatment in a converter-type refining furnace with a capacity of 300 tons. The slag pot is integrated with a carriage and can be towed by a diesel-powered vehicle to move along rails between the steel plant and the slag yard. During the stop before the slag pot was coupled with the diesel-powered tow vehicle, the emission spectrum of the steelmaking slag (Ch. Nos. 1 to 7) received in the slag pot was acquired. Specifically, the surface of the steelmaking slag discharged into the slag pot after decarburization blowing was irradiated with a pulsed laser (100 mJ, 15 Hz). The emission spectra acquired over one second were accumulated, and the resulting emission spectrum was used as the emission spectrum of the steelmaking slag (Ch. Nos. 1 to 7).

Subsequently, if the estimated f-CaO value (%) of the steelmaking slag was equal to or less than a predetermined threshold on the basis of the estimated free lime content (estimated f-CaO value) (%), the steelmaking slag was determined to be low-free lime slag. The low-free lime slag was then discharged into a slag yard 1 constructed along the rails. If the estimated f-CaO value (%) of the steelmaking slag exceeded a predetermined threshold, the steelmaking slag was determined to be high-free lime slag. The high-free lime slag was then discharged into a slag yard 2 constructed along the rails. When the estimated f-CaO value (%) of the steelmaking slag was 5.20, the final product, the iron and steel slag for road construction, exhibited deterioration of the expansion properties. Therefore, the predetermined threshold was set to 5.20.

The results of Inventive Example 4 are summarized in Table 3. The estimated f-CaO value (%) of each steelmaking slag (Ch. Nos. 1 to 7) in Inventive Example 4 generally shows good agreement with the measured f-CaO value (%). The standard deviation $\sigma d$ of error indicating accuracy was 0.96 for seven charges of steelmaking slag (Ch. Nos. 1 to 7).

[Table 3]

| Ch. No. | Inventive Example 4 | | Sorting |
|---|---|---|---|
| | Measured f-CaO Value (mass%) | Estimated f-CaO Value (mass%) | Slag Yard |
| 1 | 7.88 | 8.38 | 2 |
| 2 | 5.60 | 7.10 | 2 |
| 3 | 3.81 | 4.91 | 1 |
| 4 | 5.37 | 5.42 | 2 |
| 5 | 1.90 | 1.20 | 1 |
| 6 | 0.83 | 0.63 | 1 |
| 7 | 4.02 | 2.52 | 1 |

In Inventive Example 4, the estimated f-CaO value (%) was obtained on-site in a simple, rapid, and highly accurate manner, as described above. The steelmaking slag can be managed by transporting a steelmaking slag with an estimated f-CaO value (%) equal to or less than the threshold to the slag yard 1 and a steelmaking slag with an estimated f-CaO value (%) exceeding the threshold to the slag yard 2.

These results indicate that, according to this embodiment, the free lime content (%) of steelmaking slag can be estimated online in a simple, rapid, and highly accurate manner, and steelmaking slag can be managed according to its free lime content (%).

The simple, rapid, and highly accurate estimation of the free lime content (%) in steelmaking slag also enables setting of an aging treatment time suitable for steelmaking slag for each charge. This can avoid or reduce insufficient aging of steelmaking slag and can provide iron and steel slag for road construction efficiently and with stable quality (expansibility). The optimal shipping destination can also be selected according to the free lime content (%) of steelmaking slag, which allows for efficient shipment management.

**Claims**

1.  A method for estimating a free lime content of steelmaking slag, the method comprising:

    a step of acquiring an emission spectrum by irradiating steelmaking slag with a laser to convert a portion of a surface of the steelmaking slag into plasma and acquiring an emission spectrum from the plasma; and
    a step of estimating a free lime content by inputting intensities of an emission spectrum including peaks caused by emission lines of Ca, Fe, and Si, within the emission spectrum acquired in the step of acquiring the emission spectrum, into a free lime content estimation model, to output a free lime content of the steelmaking slag irradiated with the laser.

2.  The method for estimating a free lime content of steelmaking slag according to Claim 1, wherein, the estimation step includes inputting intensities of an emission spectrum further including peaks caused by emission lines of Al and P, into the free lime content estimation model.

3.  The method for estimating a free lime content of steelmaking slag according to Claim 1, wherein the free lime content estimation model is constructed using the partial least squares regression using the intensities of the emission spectrum including peaks caused by the emission lines of Ca, Fe, and Si, within the emission spectrum acquired in the step of acquiring the emission spectrum, as explanatory variables, and using the free lime content as a response variable.

4.  The method for estimating a free lime content of steelmaking slag according to Claim 3, wherein the free lime content estimation model uses intensities of an emission spectrum further including peaks caused by emission lines of Al and P, as explanatory variables.

5.  The method for estimating a free lime content of steelmaking slag according to Claim 1, wherein the free lime content estimation model is a trained machine learning model using the intensities of the emission spectrum including peaks caused by the emission lines of Ca, Fe, and Si, within the emission spectrum acquired in the step of acquiring the emission spectrum, as input data, and using the free lime content as output data.

6.  The method for estimating a free lime content of steelmaking slag according to Claim 5, wherein the free lime content estimation model uses intensities of an emission spectrum further including peaks caused by emission lines of Al and P, as input data.

7.  The method for estimating a free lime content of steelmaking slag according to Claim 1, wherein the emission spectrum acquired in the step of acquiring the emission spectrum has wavelengths of 270 nm or more and 410 nm or less.

8.  A method for manufacturing iron and steel slag for road construction, the method comprising: estimating a free lime content of steelmaking slag using the method for estimating a free lime content of steelmaking slag according to Claim 1; and setting aging treatment conditions for the steelmaking slag based on the estimated free lime content of the steelmaking slag.

9.  A method for managing shipment of steelmaking slag, the method comprising: estimating a free lime content of steelmaking slag using the method for estimating a free lime content of steelmaking slag according to Claim 1; and selecting a shipping destination for the steelmaking slag based on the estimated free lime content of the steelmaking slag.

10. A method for generating a free lime content estimation model for steelmaking slag for use in estimating a free lime content in steelmaking slag, the method comprising:

a first acquisition step of irradiating the steelmaking slag with a laser to convert a portion of a surface of the steelmaking slag into plasma and acquiring an emission spectrum from the plasma;

a second acquisition step of acquiring an actual free lime content of the steelmaking slag whose emission spectrum has been acquired in the first acquisition step; and

a model generation step of acquiring multiple datasets each consisting of pairs of the emission spectrum acquired in the first acquisition step and the actual free lime content acquired in the second acquisition step, and, based on these datasets, generating a free lime content estimation model using intensities of an emission spectrum including peaks caused by emission lines in Ca, Fe, and Si, within the emission spectrum acquired in the first acquisition step, as input, and using the actual free lime content acquired in the second acquisition step as output.

11. The method for generating a free lime content estimation model for steelmaking slag according to Claim 10, wherein the model generation step uses intensities of an emission spectrum further including peaks caused by emission lines of Al and P, as input.

# FIG. 1

# FIG. 2

# FIG. 3

## INTERNATIONAL SEARCH REPORT

<table>
<tr><td colspan="2">International application No.</td></tr>
<tr><td colspan="2">PCT/JP2024/002416</td></tr>
</table>

**A. CLASSIFICATION OF SUBJECT MATTER**

***G01N 21/71*** (2006.01)i

FI: G01N21/71

According to International Patent Classification (IPC) or to both national classification and IPC

**B. FIELDS SEARCHED**

Minimum documentation searched (classification system followed by classification symbols)

G01N21/62-G01N21/74, G01N15/00-G01N15/1492, G01N31/00-G01N31/22, C21C1/00-C21C7/10, C21B3/00-C21B15/04, C21D1/00-C21D11/00, G06N3/00-G06N99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII), Science Direct, ACS PUBLICATIONS, KAKEN, AgriKnowledge

**C. DOCUMENTS CONSIDERED TO BE RELEVANT**

| Category* | Citation of document, with indication, where appropriate, of the relevant passages | Relevant to claim No. |
|---|---|---|
| X | JP 2016-048235 A (JFE STEEL CORPORATION) 07 April 2016 (2016-04-07) paragraph [0007]-[0055], fig. 1-6 | 1-2, 7, 9 |
| Y | | 2-6, 8, 10-11 |
| X | JP 2016-145405 A (JFE STEEL CORPORATION) 12 August 2016 (2016-08-12) paragraph [0021]-[0142], fig. 1-3 | 1-2, 7, 9 |
| Y | | 2-6, 8, 10-11 |
| X | CN 115541561 A (SHANGHAI CUSTOMS OF THE PEPOLE'S REPUBLIC OF CHINA INSPECTION CENTER OF INDUSTRIAL PRODUCTS & RAW MATERIALS) 30 December 2022 (2022-12-30) paragraphs [0081]-[0187], fig. 1-9 | 1, 3, 5, 7, 9-10 |
| Y | | 2-6, 8, 10-11 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
|---|
| **PCT/JP2024/002416** |

### C. DOCUMENTS CONSIDERED TO BE RELEVANT

| Category* | Citation of document, with indication, where appropriate, of the relevant passages | Relevant to claim No. |
|---|---|---|
| Y | 路盤材としての鉄鋼スラグの基礎的性質と力学的特性, 土木学会論文集, February 1990, no. 414/V-12, pp. 89-98, 3. Basic properties of iron and steel slags as roadbase materials, (SOME BASIC AND MECHANICAL PROPERTIES OF IRON AND STEEL SLAGS AS BASE-COURSE MATERIALS. Doboku Gakkai Ronbunshu.) 3. Basic properties of iron and steel slags as roadbed materials | 8 |
| Y | エージングによる転炉スラグの安定化機構, 鉄と鋼, 01 April 1982, vol. 68, no. 6, pp. 641-648, doi: 10.2355/tettsutohagane1955.68.6_641, (Stabilization Mechanism of Steel Slag by Aging Treatment. Tetsu-to-Hagane.) 1. Introduction, 2. Experimental samples and methods | 8 |
| Y | 転炉スラグのアスファルト混合物への利用に関する研究, 土木学会論文集, February 1986, vol. 366/V-4, pp. 83-91, 3. Influence of aging period on properties of asphalt mixtures, (A STUDY ON THE UTILIZATION OF STEEL SLAG FOR ASPHALT MIXTURES. Doboku Gakkai Ronbunshu.) 3. Influence of aging period on properties of asphalt mixtures | 8 |
| Y | 浚渫土と転炉系製鋼スラグの混合材の海域利用のための技術マニュアル（案） [online], 本編, 国土交通省 中国地方整備局 港湾空港部, March 2017, pp. 1-171, <URL:https://www.pa.cgr.milt.go.jp/minato-seibi/pdf/manual_main.pdf> [retrieved on: 06 March 2024], (Ports and Airports Department, Chugoku Regional Development Bureau, MLIT.), non-official translation (Technical manual (draft) for mixture of dredged soil and converter steel-making slag for sea area utilization. Main chapter) 2.2 Converter steel-making slag | 8 |
| A | 酸化カルシウムの溶解によるエチレングリコールの物性変化とその抑制, 鉄と鋼, July 2014, vol. 100, no. 7, pp. 95-102, (Change in Characteristics of Ethyleneglycol during Dissolving Calcium Oxide and its Suppression. Tetsu-to-Hagane.) 1. Introduction | 1-11 |
| A | JP 2023-026141 A (NIPPON STEEL CORPORATION) 24 February 2023 (2023-02-24) | 1-11 |
| A | WO 2022/244408 A1 (JFE STEEL CORPORATION) 24 November 2022 (2022-11-24) | 1-11 |
| A | CN 106814061 A (HUAZHONG UNIVERSITY OF SCIENCE AND TECHNOLOGY) 09 June 2017 (2017-06-09) | 1-11 |
| A | CN 113092448 A (CENTRAL SOUTH UNIVERSITY) 09 July 2021 (2021-07-09) | 1-11 |
| A | CN 104697965 A (NORTHWEST UNIVERSITY) 10 June 2015 (2015-06-10) | 1-11 |
| A | CN 104697964 A (NORTHWEST UNIVERSITY) 10 June 2015 (2015-06-10) | 1-11 |
| A | CN 110705372 A (SHANGHAI INSTITUTE OF TECHNICAL PHYSICS, CHINESE ACADEMY OF SCIENCES) 17 January 2020 (2020-01-17) | 1-11 |
| A | US 2019/0079019 A1 (SOBRON, Pablo) 14 March 2019 (2019-03-14) | 1-11 |
| A | レーザー誘起ブレークダウン分光法の製鋼プロセスへの応用, 材料とプロセス, CAMPS-ISIJ. vol. 34. 一般社団法人日本鉄鋼協会, 2021, 320, (Application of Laser Induced Breakdown Spectroscopy to iron and steel making processes. Current Advances in Materials and Processes. The Iron and Steel Institute of Japan.) | 1-11 |
| A | レーザー誘起プラズマ発光分光分析法とレーザー三次元計測を併用したステンレス鋼の相互分離, 材料とプロセス, CAMP-ISIJ. vol. 29. 一般社団法人日本鉄鋼協会, 2016, 516, (Current Advances in Materials and Processes. The Iron and Steel Institute of Japan.), non-official translation (Mutual separation of stainless steel using laser-induced plasma optical emission spectroscopy and laser three-dimensional measurement) | 1-11 |

Form PCT/ISA/210 (second sheet) (July 2022)

## INTERNATIONAL SEARCH REPORT
### Information on patent family members

| | International application No. |
|---|---|
| | **PCT/JP2024/002416** |

| Patent document cited in search report | | | Publication date (day/month/year) | Patent family member(s) | | | Publication date (day/month/year) |
|---|---|---|---|---|---|---|---|
| JP | 2016-048235 | A | 07 April 2016 | (Family: none) | | | |
| JP | 2016-145405 | A | 12 August 2016 | JP | 2017-193784 | A | |
| CN | 115541561 | A | 30 December 2022 | (Family: none) | | | |
| JP | 2023-026141 | A | 24 February 2023 | (Family: none) | | | |
| WO | 2022/244408 | A1 | 24 November 2022 | JP | 7111282 | B1 | |
| | | | | KR | 10-2023-0169344 | A | |
| | | | | TW | 202246758 | A | |
| CN | 106814061 | A | 09 June 2017 | (Family: none) | | | |
| CN | 113092448 | A | 09 July 2021 | (Family: none) | | | |
| CN | 104697965 | A | 10 June 2015 | (Family: none) | | | |
| CN | 104697964 | A | 10 June 2015 | (Family: none) | | | |
| CN | 110705372 | A | 17 January 2020 | (Family: none) | | | |
| US | 2019/0079019 | A1 | 14 March 2019 | (Family: none) | | | |

Form PCT/ISA/210 (patent family annex) (July 2022)

## REFERENCES CITED IN THE DESCRIPTION

### Patent documents cited in the description

- JP 2012042464 A
- JP 2001064714 A
- JP 2016048235 A

### Non-patent literature cited in the description

- *Standardization of Techniques for Characterization of Free CaO in Iron and Steel Slag, Final Report of the Study Group on Standardization of Techniques for Characterization of Free CaO in Iron and Steel Slag*, 28 March 2013, 88-95
- **WADA** ; **KANAME et al.** Hardness Stabilization Treatment for Molten Converter Slag. *Seitetsu Kenkyu (Iron and Steel Research in Japanese)*, 1980, vol. 3011, 59-70
- **OKAZAKI** ; **KODAI et al.** Examination of Measurement Method of the Hardness by Laser Induced Breakdown Spectroscopy (LIBS). *The Atomic Energy Society of Japan, 2019 Spring Annual Meeting*, March 2019
- **MURAYAMA** ; **SEIJI et al.** Plasma Emission Spectroscopy for Solid Sample Analysis: Measurement Methods Series 2. *The Spectroscopical Society of Japan, Center for Academic Publications Japan*, October 1982